# EUROPÄISCHE PATENTSCHRIFT

(11) **EP 4 248 799 B1**
(45) Veröffentlichungstag und Bekanntmachung des Hinweises auf die Patenterteilung: **21.01.2026**
(21) Anmeldenummer: 22164203.6
(22) Anmeldetag: 24.03.2022
(51) Int. Cl.: A47B 88/457, A47B 88/473, A47B 88/50, B60T 1/04, F16D 63/00, F16H 25/24

(54) **VERRIEGELUNGSSYSTEM**
SEALING SYSTEM
SYSTÈME DE VERROUILLAGE

(43) Veröffentlichungstag der Anmeldung: 27.09.2023
(73) Patentinhaber: Accuride International GmbH, 65582 Diez/Lahn (DE)
(72) Erfinder: SATONY, Christian, 56598 Rheinbrohl (DE); NEUHAUS, Christoph, 56412 Niederelbert (DE)
(74) Vertreter: WSL Patentanwälte Partnerschaft mbB

(56) Entgegenhaltungen:
- WO-A1-2021/244715
- JP-A- H09 224 348
- US-A1- 2020 366 159

## Beschreibung

### GEGENSTAND DER ERFINDUNG

Die vorliegende Erfindung betrifft ein lineares Führungssystem mit mindestens einem ersten Schienenelement und einem zweiten Schienenelement, welche in und entgegen einer Auszugsrichtung linear gegeneinander verschiebbar aneinander gelagert sind, einem Linearantrieb, welcher eine rotierbare Antriebswelle und einen für die Übertragung eines Drehmoments auf die Antriebswelle ausgelegten Elektromotor aufweist, wobei der Linearantrieb derart ausgestaltet ist, dass eine Rotationsbewegung der Antriebswelle eine lineare Bewegung der ersten und zweiten Schienenelemente in oder entgegen der Auszugsrichtung relativ zueinander bewirkt. Das lineare Führungssystem ist eine Teleskopschiene oder eine Linearführung mit mindestens zwei über Wälzkörperlager linear gegeneinander verschiebbar aneinander gelagerten Schienenelementen.

### HINTERGRUND DER ERFINDUNG

Lineare Führungssysteme im Sinne der vorliegenden Erfindung umfassen Teleskopschienen und Linearführungen mit mindestens zwei über Wälzkörperlager linear gegeneinander verschiebbar aneinander gelagerten Schienenelementen. Teleskopschienen unterscheiden sich von Linearführungen dadurch, dass Teleskopschienen in der Regel gleich lange oder ähnlich lange gegeneinander verschiebbar gelagerte Schienenelemente aufweisen, wogegen Linearführungen dadurch gekennzeichnet sind, dass ein kurzes Schienenelement, das auch als Schlitten bezeichnet wird, an einem längeren Schienenelement verschiebbar gelagert ist. Teleskopschienen mit zwei gleich langen oder ähnlich langen Schienenelementen werden als Teilauszug bezeichnet. Solche Teleskopschienen lassen sich aufgrund der erforderlichen Überlappung der Schienenelemente, damit sich diese beim Auszug nicht voneinander trennen, und des zwischen den Schienenelementen angeordneten Lagers nicht bis auf die doppelte Länge ihres vollständig eingefahrenen Zustands ausziehen. Teleskopschiene mit mehr als zwei gleich langen oder ähnlich langen Schienenelementen bezeichnet man als Unterauszug, Vollauszug oder Überauszug, je nachdem ob ihre Länge im voll ausgezogenen Zustand geringer, gleich oder länger ist als ihre Länge im vollständig eingeschobenen Zustand.

Lineare Führungssysteme werden in den verschiedensten Bereichen eingesetzt, beispielsweise in Möbeln, Haushaltsgeräten, Computerracks, aber auch im Automobilbau und in vielen weiteren Anwendungen. In der Regel ist ein Schienenelement des linearen Führungssystems stationär, d. h. an einem Korpus fixiert, während das weitere Schienenelement oder die weiteren Schienenelemente zum Verfahren eines Verfahr- oder Auszugselements, wie z. B. einer Schublade, gegenüber dem stationären Schienenelement verschiebbar gelagert ist bzw. sind. Bekannt sind kraftunterstützte Systeme, die das lineare Verschieben der Schienenelemente gegeneinander über einen Teil des Verfahrweges oder über den gesamten Verfahrweg durch Federkraft oder mittels eines Elektromotors unterstützen oder bewirken.

Beispiele für bekannte kraftunterstützte lineare Führungssysteme sind Endeinzüge an Teleskopschienen für Auszugselemente, wie z. B. Schubladen, bei denen eine Kraftunterstützung beim Einschieben des Auszugselements auf der letzten Wegstrecke kurz vor und bis zur Einschubendposition erfolgt. Das Auszugselement wird von einer Bedienperson zunächst bis zu einer vorgegebenen Position eingeschoben, bei der dann das verschiebbare Schienenelement mit dem Endeinzug in Eingriff tritt und mittels einer vorgespannten Feder in die Einschubendposition gezogen wird.

Es sind auch lineare Führungssysteme bekannt, bei denen das lineare Verschieben der Schienenelemente gegeneinander mittels eines Elektromotors bewirkt wird, z. B. bei der Sitzverstellung in Kraftfahrzeugen. Der Elektromotor überträgt dabei ein Drehmoment auf eine Antriebswelle, welches weiter auf einen Linearantrieb übertragen wird, der dann die Rotationsbewegung der Antriebswelle in eine Linearbewegung der Schienenelemente relativ zueinander umsetzt. Der Linearantrieb kann beispielsweise über eine Spindel oder einen Zahnriemen erfolgen.

Um bei einer relativ niedrigen Drehzahl des Elektromotors dennoch eine hohe Verfahrgeschwindigkeit der Schienenelemente gegeneinander zu erzielen, ist der Linearantrieb mit einer hohen Übersetzung der Drehzahl des Elektromotors auf die Linearbewegung auszulegen. Bei einem Spindelantrieb kann dies beispielsweise über eine hohe Gewindesteigung der Spindel erfolgen, bei einem Zahnriemenantrieb kann hierfür der Durchmesser der den Zahlriemen antreibenden Riemenscheibe entsprechend groß gewählt werden. Auch durch ein zwischengeschaltetes Getriebe kann die Übersetzung von der Drehzahl des Elektromotors auf die Linearbewegung ebenfalls erhöht werden.

In allen Fällen ist eine Erhöhung der Übersetzung zum Erreichen höherer Verfahrgeschwindigkeiten damit verbunden, dass der Elektromotor zum Bewirken der Linearbewegung der Schienenelemente auch eine höhere Kraft bzw. ein höheres Drehmoment aufbringen muss, als bei einer niedrigeren Übersetzung. Geeignete Elektromotoren, welche die erforderliche Kraft bzw. das erforderliche Drehmoment im bestromten Zustand aufbringen können, stehen zur Verfügung. Ist eine bestimmte Verfahrposition der Schienenelemente erreicht und soll gehalten werden, wird der Elektromotor in der Regel stromlos geschaltet, auch um Energie zu sparen. Bei Schrittmotoren wird ein geringer Haltestrom aufgebracht. Wird nun umgekehrt bei einem solchen System mit hoher Übersetzung auf das verfahrene Schienenelement eine Kraft in eine der Verfahrrichtungen ausgeübt, wird diese Kraft über den Linearantrieb und die Übersetzung in ein Drehmoment auf die Antriebswelle und somit auf den Elektromotor übertragen. Auch im stromlosen Zustand oder im Falle eines Schrittmotors unter geringem Haltestrom setzt der Elektromotor einem auf die Motorwelle wirkenden Drehmoment in der Regel immer noch eine gewisse Haltekraft entgegen, die jedoch wesentlich geringer als im bestromten Zustand ist. Eine zum Erreichen höherer Verfahrgeschwindigkeiten vorteilhafte hohe Übersetzung bei der Übertragung des Drehmoments vom Elektromotor auf den Linearantrieb hat daher umgekehrt zur Folge, dass bereits eine geringere Kraft auf das Schienenelement in eine der Verfahrrichtungen ein höheres Drehmoment auf die Antriebswelle und weiter auf den Motor bewirkt als bei einer niedrigeren Übersetzung. Dies kann die nachteilige Folge haben, dass die Haltekraft des Elektromotors im stromlosen Zustand nicht ausreicht, um die Schienenelemente in einer Verfahrposition zu halten, wenn bereits eine geringe Kraft in eine der Verfahrrichtungen auf ein Schienenelement einwirkt. Die Schienenelemente können leichter unbeabsichtigt, z.B. von Hand, aus ihrer gewünschten Verfahrposition verschoben werden.

Die JP H09 224348 offenbart einen Linearaktuator für Schwerlastanwendungen, insbesondere für den Kippmechanismus von Lkw-Kabinen oder für elektrisch verstellbare Stühle, Tische, Hebebühnen etc., bei dem ein zylindrischer Schaft über eine Kugelrollspindel angetrieben in einer Einfahr- oder Ausfahrtrichtung in einem Rohr geführt wird. Der Linearaktuator ist dafür ausgelegt, dass er den zylindrischen Schaft unter hoher Last nicht nur bewegen sondern auch im Stillstand halten kann.

### AUFGABE DER ERFINDUNG

Der vorliegenden Erfindung lag daher die die Aufgabe zugrunde, ein lineares Führungssystem bereitzustellen, welches die zuvor genannten Nachteile verringert oder vermeidet.

### BESCHREIBUNG DER ERFINDUNG

Gelöst wird diese Aufgabe durch ein lineares Führungssystem der eingangs genannten Art, nämlich eine Teleskopschiene oder eine Linearführung mit mindestens zwei über Wälzkörperlager linear gegeneinander verschiebbar aneinander gelagerten Schienenelementen, welches dadurch gekennzeichnet ist, dass
ein zwischen einer Entriegelungsstellung und einer Verriegelungsstellung zustellbares und rückstellbares Verriegelungselement vorgesehen ist,
welches derart ausgebildet ist, dass es für eine Blockierung der Rotationsbewegung der Antriebswelle in der Verriegelungsstellung mit einem mit der Antriebswelle drehfest verbundenen oder als Abschnitt der Antriebswelle ausgebildeten Eingriffselement formschlüssig und/oder kraftschlüssig in Eingriff tritt, und
ein Aktuator vorgesehen ist, welcher für eine Zustellung des Verriegelungselements zu dem Eingriffselement aus der Entriegelungsstellung in die Verriegelungsstellung sowie für eine Rückstellung des Verriegelungselements aus der Verriegelungsstellung in die Entriegelungsstellung ausgelegt ist
wobei das Verriegelungselement derart gelagert ist, dass die Zustellung des Verriegelungselements zum Eingriffselement von der Entriegelungsstellung in die Verriegelungsstellung a) linear parallel zur Rotationsachse der Antriebswelle, b) auf einer linearen oder gekrümmten Bahn mit zur Rotationsachse der Antriebswelle parallelen und radialen Richtungskomponenten oder c) auf einer Kreisbahn um eine parallel oder senkrecht zur Rotationsachse der Antriebswelle angeordnete Drehachse erfolgt.

Die Erfindung stellt somit ein Verriegelungssystem für ein lineares Führungssystem bereit, welches in einer Verriegelungsstellung eine Rotationsbewegung der Antriebswelle und somit die Übertragung eines Drehmoments von dieser auf den Elektromotor blockiert, wenn auf ein Schienenelement eine Kraft in eine der Verfahrrichtungen wirkt, während sich das System in der Verriegelungsstellung befindet. Das erfindungsgemäße System ist geeignet, ein lineares Führungssystem in einer Verfahrposition zu verriegeln und ein unbeabsichtiges Verfahren der Schienenelemente zu verhindern. Mit Vorteil ist das erfindungsgemäße System nicht auf eine Verriegelung in einer einzigen oder einer Mehrzahl festgelegter Verfahrpositionen der Schienenelemente des Führungssystems beschränkt. Vielmehr kann bei dem erfindungsgemäßen System das Verriegelungselement bei jeder beliebigen Verfahrposition der Schienenelemente gegeneinander mit dem Eingriffselement in Eingriff gebracht werden und somit das lineare Führungssystem in jeder Verfahrposition verriegeln. Wenn hierin von einer Verriegelung in jeder Verfahrposition die Rede ist, umfasst dies auch Verriegelungen, die nur in kurzen Abständen zueinander möglich sind, beispielsweise wenn der Eingriff zwischen dem Verriegelungselements und dem Eingriffselement über eine Zahnung erfolgt und der Abstand von einer Verrieglungsposition zur nächsten durch den Abstand bzw. die Größe zweier benachbarter Zähne bestimmt wird.

Der Aktuator bewirkt das Zustellen des Verriegelungselements zu dem Eingriffselement aus der Entriegelungsstellung in die Verriegelungsstellung sowie das Rückstellen des Verriegelungselements von dem Eingriffselement weg aus der Verriegelungsstellung in die Entriegelungsstellung, bei der das Verriegelungselement außer Eingriff mit dem Eingriffselement gebracht wird, um die Verriegelung zu lösen.

In einer Ausführungsform der Erfindung ist das lineare Führungssystem eine Teleskopschiene mit gleich langen oder ähnlich langen gegeneinander verschiebbar gelagerten Schienenelementen. In einer weiteren Ausführungsform der Erfindung ist das lineare Führungssystem eine Linearführung mit wenigstens einem kurzen Schienenelement (Schlitten), das an einem wesentlich längeren, mindestens doppelt so langen Schienenelement verschiebbar gelagert ist. Das erfindungsgemäße Verriegelungssystem ist auf beide Varianten von linearen Führungssystemen gleichsam mit Vorteil anwendbar.

Die Schienenelemente des erfindungsgemäßen linearen Führungssystems sind vorzugsweise aus einem Material hergestellt, ausgewählt aus der Gruppe, bestehend aus Stahlblech, aluminiertem Stahlblech und Edelstahl. Die Schienenelemente des erfindungsgemäßen linearen Führungssystems können dabei je nach Anforderung aus unterschiedlichen Materialien oder alle aus dem gleichen Material hergestellt sein.

Die Schienenelemente des erfindungsgemäßen linearen Führungssystems sind über Wälzkörperlager linear gegeneinander verschiebbar aneinander gelagert.

Derartige Lager verbessern die Laufeigenschaften des linearen Führungssystems und vermindern erheblich die Reibung zwischen den Schienenelementen. Besonders bevorzugt sind Wälzkörperlager. Geeignete Wälzkörper sind beispielsweise Kugeln, Rollen, Tonnen, Nadeln oder Kegel. Vorzugsweise sind die Wälzkörper in einem Wälzkörperkäfig aufgenommen. In einer Ausführungsform der vorliegenden Erfindung sind die Wälzkörper Kugeln und der Wälzkörperkäfig ein Kugelkäfig.

Das lineare Führungssystem der vorliegenden Erfindung umfasst mindestens ein erstes Schienenelement und ein zweites Schienenelement. In einer Ausführungsform ist das lineare Führungssystem eine als Teilauszug ausgebildete Teleskopschiene mit genau zwei Schienenelementen, einem ersten Schienenelement und einem zweiten Schienenelement. In einer weiteren Ausführungsform ist das lineare Führungssystem eine Teleskopschiene, die neben dem ersten Schienenelement und dem zweiten Schienenelement wenigstens ein weiteres Schienenelement aufweist. Ein oder mehrere weitere Schienenelemente können zwischen dem ersten und dem zweiten Schienenelement und/oder außerhalb davon angeordnet und gegenüber diesen linear verschiebbar gelagert sein. Die Teleskopschiene dieser Ausführungsform ist als Unterauszug, Vollauszug oder Überauszug ausgebildet.

Im Sinne der vorliegenden Erfindung wird unter der Auszugsrichtung die Richtung verstanden, in die das erste Schienenelement und das zweite Schienenelement relativ linear gegeneinander bewegt werden können, um von einer Einzugsposition in eine Auszugsposition zu gelangen. Entsprechend wird unter der Einzugsrichtung oder Einschubrichtung die entgegengesetzte Richtung verstanden, in welche die Schienenelemente relativ zueinander bewegt werden, um wieder in die Einzugsposition zu gelangen. Zusammengefasst bezeichnet Verfahrrichtung eine Richtung in Auszugsrichtung oder Einzugsrichtung.

Das erfindungsgemäße lineare Führungssystems umfasst einem Linearantrieb, welcher eine rotierbare Antriebswelle und einen für die Übertragung eines Drehmoments auf die Antriebswelle ausgelegten Elektromotor aufweist, wobei der Linearantrieb derart ausgestaltet ist, dass eine Rotationsbewegung der Antriebswelle eine lineare Bewegung der ersten und zweiten Schienenelemente in oder entgegen der Auszugsrichtung relativ zueinander bewirkt.

Ein Elektromotor im Sinne der vorliegenden Erfindung ist ein Motor mit einer sich drehenden Motorwelle zum Bereitstellen eines Drehmoments. In einer Ausführungsform der Erfindung ist der Elektromotor ausgewählt aus einer Gruppe, bestehend aus einem Schrittmotor, einem bürstenlosen Gleichstrommotor (BLDC) oder einem bürstenbehafteten Gleichstrommotor (DC). Um das erforderliche Drehmoment vom Elektromotor auf die Antriebswelle zu übertragen, ist die Motorwelle des Elektromotors in einer erfindungsgemäßen Ausführungsform über ein Getriebe oder eine Kupplung an die Antriebswelle gekoppelt. In einer weiteren erfindungsgemäßen Ausführungsform ist die Antriebswelle zugleich die Motorwelle des Elektromotors oder sie ist einstückig mit dieser ausgebildet oder anderweitig fest mit dieser verbunden.

Wenn im Sinne der vorliegenden Erfindung ausgeführt wird, dass zwei Elemente drehfest miteinander verbunden sind, so bezeichnet dies eine Verbindung, bei welcher eine Drehbewegung im Wesentlichen ohne Schlupf von dem einen Element auf das andere übertragbar ist und das Blockieren oder ein Stillstand eines Elements ein Blockieren oder einen Stillstand des anderen Elements bewirkt.

In einer Ausführungsform der Erfindung ist der Linearantrieb ein Spindelantrieb, der eine Spindel, nämlich eine Gewindespindel umfasst, welche derart ausgestaltet und angeordnet ist, dass eine Rotationsbewegung der Spindel eine lineare Bewegung der ersten und zweiten Schienenelemente in oder entgegen der Auszugsrichtung relativ zueinander bewirkt. Dabei ist die Antriebswelle des Linearantriebs wenigstens abschnittsweise als Spindel mit einem Gewinde ausgebildet oder derart drehfest mit der Spindel verbunden, dass eine Rotationsbewegung der Antriebswelle eine Rotationsbewegung der Spindel bewirkt.

Bei der Ausführungsform der Erfindung, bei welcher der Linearantrieb ein Spindelantrieb ist, ist weiterhin ein mit dem ersten oder dem zweiten Schienenelement verbundener Mitnehmer vorgesehen, welcher derart ausgebildet ist, dass er mit dem Gewinde der Spindel in Eingriff tritt und bei einer Drehbewegung der Gewindespindel das verbundene Schienenelement mitnimmt. Vorzugsweise ist der Mitnehmer eine Spindelmutter oder ein von dem Schienenelement in das Gewinde der Spindel eingreifendes Profil in der Form eines oder mehrerer Zähne, Vorsprünge, Laschen oder Ausprägungen. Die Gewindespindel ist zweckmäßigerweise ortsfest in Bezug auf das nicht mit dem Mitnehmer verbundene Schienenelement angeordnet.

In einer weiteren Ausführungsform der Erfindung ist der Linearantrieb ein Riemenantrieb, wobei der Linearantrieb einen offenen, einen geschlossenen oder einen endlosen Riemen, vorzugsweise einen Zahnriemen, und eine den Riemen bzw. Zahnriemen antreibende Riemenscheibe umfasst, welche derart ausgestaltet und angeordnet sind, dass eine Rotationsbewegung der Riemenscheibe einen Antrieb des Riemens bzw. Zahnriemens bewirkt und der Antrieb des Riemens bzw. Zahnriemens eine lineare Bewegung der ersten und zweiten Schienenelemente in oder entgegen der Auszugsrichtung relativ zueinander bewirkt. In dieser Ausführungsform ist vorzugsweise die Antriebswelle des Linearantriebs wenigstens abschnittsweise als Riemenscheibe ausgebildet oder derart drehfest mit der Riemenscheibe verbunden, dass eine Rotationsbewegung der Antriebswelle eine Rotationsbewegung der Riemenscheibe bewirkt.

Im Sinne der Erfindung bezeichnet ein offener Riemen einen solchen mit zwei nicht miteinander verbundenen freien Enden. Ein geschlossener Riemen im Sinne der Erfindung kann aus einem offenen Riemen durch Verbinden der freien Enden mittels eines Verbindungsstücks hergestellt sein, welches beispielsweise einen Mitnehmer für ein Schienenelement umfassen kann. Eine besondere Variante des geschlossenen Riemens ist der endlose Riemen, der einstückig ohne freie Enden gefertigt ist, vergleichbar mit dem Keilriemen bei einem Kraftfahrzeug. Ein geschlossener Riemen, somit auch ein endloser Riemen, wird über wenigstens zwei Umlenkscheiben oder -rollen geführt. Bei einem Linearantrieb der vorliegenden Erfindung wird wird der geschlossene oder endlose Riemen je nach Verfahrrichtung der Schienenelemente, also Einzugsrichtung oder Auszugsrichtung, in entgegengesetzten Richtungen bewegt bzw. um die Umlenkscheiben oder -rollen geführt. Die Umlaufbewegung des Riemens in die eine oder andere Richtung ist durch den vollständigen Einzug bzw. Auszug der Schienenelemente gegeneinander begrenzt.

Zweckmäßigerweise ist der Riemen des Riemenantriebs als offenes, geschlossenes oder endloses Flachband ausgebildet mit einander gegenüberlegenden Oberflächen und mit einer für einen Eingriff mit der Riemenscheibe geeigneten Breite. Das Vorsehen alternativer Riemenquerschnitte liegt im Können des Fachmanns.

Vorzugsweise ist der Riemen des Riemenantriebs ein Zahnriemen mit einer von der Riemenoberfläche hervorstehenden Zahnung, welche mit einer entsprechenden Zahnung am Umfang der Riemenscheibe in Eingriff tritt. Die Oberfläche des Riemens, welche für den Eingriff mit der Riemenscheibe vorgesehen ist, kann jedoch auch anders als mit einer Zahnung profiliert oder ausgebildet sein, solange ein form- und/oder reibschlüssiger Eingriff mit der Riemenscheibe gewährleistet ist, welcher bei einer Rotationsbewegung der Riemenscheibe einen Antrieb des Riemens ohne signifikanten Schlupf bewirkt.

Zweckmäßigerweise ist der Riemen in seiner Längserstreckung parallel zur Auszugsrichtung der Schienenelemente und die Rotationsachse der Riemenscheibe senkrecht dazu angeordnet. In einer bevorzugten Ausführungsform sind der Riemen und die Riemenscheibe ortsfest in Bezug auf eines der ersten und zweiten Schienenelemente angeordnet, während das andere Schienenelement von dem angetriebenen Riemen in oder entgegen der Auszugsrichtung mitgenommen wird. Hierfür kann das mitgenommene Schienenelement fest oder lösbar mit dem Riemen verbunden sein. Alternativ kann das Schienenelement einen Mitnehmer aufweisen, welcher ähnlich wie beim Spindelantrieb in eine Zahnung oder ein anderes Profil am Riemen eingreift und derart damit in Eingriff tritt, dass das Schienenelement von dem angetriebenen Riemen in oder entgegen der Auszugsrichtung mitgenommen wird. Dabei kann für den Eingriff des Mitnehmers mit dem Riemen die gleiche Oberfläche des Riemens dienen, welche auch mit der Riemenscheibe in Eingriff tritt. Alternativ kann auch die der Riemenscheibe gegenüberliegende Oberfläche des Riemens für einen Eingriff mit dem Mitnehmer ausgebildet sein, z. B. kann der Riemen auf beiden gegenüberliegenden Oberflächen eine Zahnung aufweisen.

In einer bevorzugten Ausführungsform handelt es sich bei dem Riemen um einen endlosen Riemen oder einen aus einem offenen Riemen durch Verbinden der freien Enden mittels eines Verbindungselements in sich geschlossenen Riemen, welcher parallel zur Auszugsrichtung der Schienenelemente ausgerichtet ist. Zweckmäßigerweise sind für eine Umlenkung des geschlossenen oder endlosen Riemens zwei Umlenkscheiben oder -rollen an den in Längserstreckung des Riemens liegenden Endabschnitten vorgesehen, wobei vorzugsweise eine der Umlenkscheiben die angetriebene Riemenscheibe ist. Beim Verschieben der Schienenelemente gegeneinander wechselt die Drehrichtung der Riemenscheibe und somit auch die Laufrichtung des Riemens um die Umlenkscheiben oder -rollen je nach Verfahrrichtung der Schienenelemente.

In einer alternativen Ausführungsform handelt es sich bei dem Riemen um einen offenen Riemen mit freien Enden, welcher parallel zur Auszugsrichtung der Schienenelemente ausgerichtet ist. In der Ausführungsform des erfindungsgemäßen Linearantriebs mit offenem Riemen ist dieser vorzugsweise fest mit dem ersten oder dem zweiten Schienenelement verbunden, z. B. flach anliegend an einer Innenseite des ersten oder zweiten Schienenelements befestigt, während die Riemenscheibe ortsfest in Bezug auf das andere Schienenelement derart angeordnet ist, dass sie mit dem Riemen in Eingriff tritt. Alternativ zu einem offenen Riemen kann auch eine Zahnstange in entsprechender Anordnung vorgesehen sein.

Das erfindungsgemäße lineare Führungssystem umfasst einen Aktuator, welcher für eine Zustellung des Verriegelungselements zu dem Eingriffselement aus der Entriegelungsstellung in die Verriegelungsstellung sowie für eine Rückstellung des Verriegelungselements aus der Verriegelungsstellung in die Entriegelungsstellung ausgelegt ist. Beim der Zustellung wird das Verriegelungselement in der Verriegelungsstellung mit dem Eingriffselement formschlüssig und/oder kraftschlüssig in Eingriff gebracht und die Rotationsbewegung der Antriebswelle blockiert, da das Eingriffselement drehfest mit der Antriebswelle verbundenen oder als Abschnitt der Antriebswelle ausgebildet ist. Bei der Rückstellung wird das Verriegelungselements vom Eingriffselement entfernt, außer Eingriff gebracht und die Verriegelung gelöst.

Für einen formschlüssigen und/oder kraftschlüssigen Eingriff in der Verriegelungsstellung sind das Verriegelungselement und das Eingriffselement zumindest in den Abschnitten, in denen der Eingriff erfolgt, entsprechend geformt oder profiliert. Vorteilhaft ist beispielsweise ein Wellen- oder Zahnprofil an wenigstens einem der Elemente, vorzugsweise an beiden Elementen für einen formschlüssigen Eingriff. Auch Ausnehmungen oder Bohrungen an einem Element und ein oder mehrere Erhebungen, Zapfen oder Dorne an dem Gegenelement sind geeignet.

Je nachdem, an welchen Abschnitten und mit welcher Profilierung die Eingriffsflächen am Verriegelungselement und am Eingriffselement ausgebildet sind und aus welcher Richtung die Zuführung des Verriegelungselements zum Eingriffselement erfolgt, ist es vorteilhaft an der Profilierung Eingriffshilfen, z. B. Zuführschrägen, vorzusehen.

In einer vorteilhaften Ausführungsform des erfindungsgemäßen linearen Führungssystems ist das Eingriffselement im Wesentlichen rotationssymmetrisch bezüglich der Rotationsachse der Antriebswelle ausgebildet und angeordnet. Das Eingriffselement dieser Ausführungsform kann als eine Profilierung, z. B. eine Zahnung, in Umfangsrichtung auf der Oberfläche der Antriebswelle ausgebildet sein. In einer vorteilhaften Ausführungsform weist das Eingriffselement jedoch einen größeren Durchmesser als die Antriebswelle auf und ist weiter vorzugsweise im Wesentlichen scheibenförmig oder zylinderförmig ausgebildet und drehfest mit der Antriebswelle verbunden.

Je weiter in radialer Richtung von der Drehachse des Eingriffselements entfernt der Eingriff des Verriegelungselements mit dem Eingriffselement erfolgt, desto geringer ist die durch den Eingriff zwischen Verriegelungselement und Eingriffselement von dem Verriegelungselement aufzubringende Haltekraft, um die Antriebswelle gegen ein wirkendes Drehmoment zu blockieren. Ein großer radialer Abstand des Eingriffs mit dem Verriegelungselement von der Drehachse kann daher Vorteile in Bezug auf die aufzubringende Haltekraft und somit auf die Konstruktion und Befestigung der einzelnen Elemente in dem Gesamtsystem haben. Andererseits ist der für die erforderlichen Elemente verfügbare Bauraum zu berücksichtigen.

In einer Ausführungsform der Erfindung weist das Eingriffselement auf einer zur Rotationsachse der Antriebswelle radial auswärts weisenden Fläche, d. h. der Umfangsfläche oder Mantelfläche, ein Eingriffsprofil für einen Eingriff mit dem Verriegelungselement auf, und das Verriegelungselement weist ein für einen formschlüssigen Eingriff mit dem Eingriffsprofil des Eingriffselements in der Verriegelungsstellung ausgebildetes Gegenprofil auf. In einer vorteilhaften Ausführungsform ist dabei das Eingriffsprofil des Eingriffselements ein durch Erhebungen und/oder Ausnehmungen auf einer Oberfläche des Eingriffselements ausgebildetes Zahnprofil oder Wellenprofil.

In einer weiteren Ausführungsform der Erfindung weist das Eingriffselement auf einer zur Rotationsachse der Antriebswelle in axialer Richtung weisenden Fläche, z. B. einer Stirnfläche, ein Eingriffsprofil und das Verriegelungselement ein für einen formschlüssigen Eingriff mit dem Eingriffsprofil des Eingriffselements in der Verriegelungsstellung ausgebildetes Gegenprofil auf. Auch bei dieser Ausführungsform kann das Eingriffsprofil des Eingriffselements mit Vorteil ein durch Erhebungen und/oder Ausnehmungen auf einer Oberfläche des Eingriffselements ausgebildetes Zahnprofil oder Wellenprofil sein. Alternativ oder ergänzend sind an einem Element Bohrungen, z. B. Sackbohrungen oder Durchgangsbohrungen, vorgesehen und am Gegenelement Zapfen, Stifte oder Dorne, welche für einen Eingriff und eine Verriegelung der Elemente gegeneinander in die Bohrungen des anderen Elements eingeführt werden.

In einer weiteren Ausführungsform der Erfindung weist das Eingriffselement sowohl auf einer zur Rotationsachse der Antriebswelle radial auswärts weisenden Fläche als auch auf einer in axialer Richtung weisenden Fläche Eingriffsprofile auf, d. h. eine Kombination der beiden vorgenannten Ausführungsformen.

Das Eingriffsprofil am Eingriffselement und das Gegenprofil am Verriegelungselement können im Wesentlichen komplementär in der Weise ausgebildet sein, dass die Profile in der Verriegelungsstellung über einen Bereich vollflächig in Anlage zueinander kommen. Für einen formschlüssigen Eingriff in der Verriegelungsstellung kann es jedoch auch genügen, wenn die Profile nur abschnittsweise mit Ihren jeweiligen Oberflächen in Anlage zueinander kommen oder auch nur punktuell oder an einer Kante eines Elements. Für einen kraftschlüssigen Eingriff in der Verriegelungsstellung, z. B. eine reibschlüssige Verriegelung, ist eine flächige Berührung von Oberflächenabschnitten des Eingriffselements und des Verriegelungselements unter gleichzeitiger Aufbringung einer Anpresskraft und/oder das Vorsehen einer die Reibung erhöhenden Oberflächenrauheit von Vorteil, um eine ausreichende Haltekraft in der Verriegelungsstellung zu gewährleisten.

Die von dem Aktuator bewirkte Zustellung und Rückstellung des Verriegelungselements hin zum Eingriffselement in die Verriegelungsstellung und zurück in die Entriegelungsstellung kann auf verschiedene Weisen und unterschiedlichen Wegen erfolgen. Wenn nachfolgend von dem Zustellweg des Verriegelungselements zum Eingriffselement in die Verriegelungsstellung die Rede ist, so erfolgt die Rückstellung zweckmäßigerweise auf dem gleichen Weg in entgegengesetzter Richtung in die Entriegelungsstellung.

In einer Ausführungsform der Erfindung ist das Verriegelungselement derart gelagert, dass die Zustellung des Verriegelungselements zum Eingriffselement von der Entriegelungsstellung in die Verriegelungsstellung linear parallel zur Rotationsachse der Antriebswelle erfolgt.

In einer weiteren Ausführungsform der Erfindung ist das Verriegelungselement derart gelagert, dass die Zustellung des Verriegelungselements zum Eingriffselement von der Entriegelungsstellung in die Verriegelungsstellung auf einer linearen oder gekrümmten Bahn mit zur Rotationsachse der Antriebswelle parallelen und radialen Richtungskomponenten erfolgt.

In einer weiteren Ausführungsform der Erfindung ist das Verriegelungselement derart angelenkt gelagert, dass die Zustellung des Verriegelungselements zum Eingriffselement von der Entriegelungsstellung in die Verriegelungsstellung auf einer Kreisbahn um eine parallel oder senkrecht zur Rotationsachse der Antriebswelle angeordnete Drehachse erfolgt.

Das Verriegelungselement ist für eine lineare Zustellung oder eine Zustellung auf einer gekrümmten Bahn mit Vorteil an einer Schiene oder in einer Kulisse geführt gelagert und wird mittels des Aktuators mit einer Kraft in Richtung des Eingriffselements beaufschlagt. Vorteilhaft ist die Lagerung und Führung des Verriegelungselements mittels einer Gleitführung. Alternativ sind auch Wälzkörperführungen geeignet.

Die vom Aktuator für die Zustellung und Rückstellung des Verriegelungselements aufzubringende Kraft kann erfindungsgemäß durch dasselbe Mittel, gleiche Mittel oder unterschiedliche Mittel am Aktuator erfolgen. Eine Zustellung und Rückstellung des Verriegelungselements durch dasselbe Mittel kann z. B. durch einen Spindelantrieb erfolgen, bei dem die Spindel für die Zustellung und Rückstellung jeweils in entgegengesetzter Richtung rotiert wird und das Verriegelungselement mitnimmt. Alternativ kann für eine Zustellung und Rückstellung des Verriegelungselements durch dasselbe Mittel ein Hubmagnet mit umkehrbarer Polung eingesetzt werden, der das Verriegelungselement je nach Polung in Zustell- oder Rückstellrichtung bewegt. Ein solcher Hubmagnet kann mit Vorteil an einer oder beiden Endlagen, d. h. in der Entriegelungsstellung und/oder der Verriegelungsstellung, einen Permanentmagneten aufweisen, welcher den bewegbaren Anker des Hubmagneten in der Endlage hält.

In einer bevorzugten Ausführungsform der Erfindung erfolgen Zustellung und Rückstellung des Verriegelungselements durch unterschiedliche Mittel am Aktuator. Erfindungsgemäß geeignete und vorteilhafte Mittel für die Zustellung oder Rückstellung des Verriegelungselementes in eine Richtung umfassen einen elektrisch betriebenen Linearstellantrieb, einen elektrisch aktivierbaren Formgedächtnisantrieb, einen elektrisch aktivierbaren oder auslösbaren Hubmagneten, ein elektrisch aktivierbares oder auslösbares Federelement. Ein vorgenanntes Mittel für eine Zustellung oder Rückstellung kann mit jedem anderen der genannten Mittel für die entgegengesetzte Bewegungsrichtung des Verriegelungselementes kombiniert werden. Auch Kombinationen von zwei oder mehr Mitteln für eine Bewegungsrichtung des Verriegelungselementes möglich, beispielsweise die Unterstützung der Zustell- oder Rückstellkraft eines elektrisch betriebenen Linearstellantriebs durch ein Federelement.

Lineare Führungssysteme der erfindungsgemäßen Art werden in der Regel über einen langen Zeitraum in einer bestimmten Verfahrposition gehalten, d. h. mit dem Verriegelungselement und dem Eingriffselement in der Verriegelungsstellung, während eine Entriegelung nur für das Verfahren der Schienenelemente erforderlich ist. Es ist daher unter anderem aus wirtschaftlichen Gründen zweckmäßig, wenn das System in der Verriegelungsstellung möglichst stromlos gehalten wird oder nur mit geringem Haltestrom.

Es ist daher vorteilhaft, wenn die Zustellung des Verriegelungselementes zum Eingriffselement in die Verriegelungsstellung durch ein Mittel erfolgt, welches geeignet ist, das Verriegelungselementes und das Eingriffselement stromlos in der Verriegelungsstellung zu halten und dabei noch eine Haltekraft gegen ein Lösen der Verriegelungsstellung aufbringt. Geeignet ist hierfür ein in Richtung der Verriegelungsstellung vorgespanntes Federelement oder ein Hubmagnet, welcher beispielsweise mittels eines zusätzlichen Permamentmagneten auch stromlos in der Endlage der Verriegelungsstellung gehalten wird. Da das Verfahren der Schienenelemente in der Regel jeweils nur kurzzeitig eine Entriegelung erfordert, ist für die Rückstellung des Verriegelungselements in die Entriegelungsstellung ein bestromtes Mittel geeignet, welches ausreichend Kraft ausübt, um auch das Mittel für die Zustellung aus der Verriegelungsstellung in die Entriegelungsstellung zu bringen, beispielsweise ein für die Zustellung eingesetztes Federelement wieder in der Entriegelungsstellung vorzuspannen.

In einer erfindungsgemäß bevorzugten Ausführungsform erfolgt die Zustellung des Verriegelungselementes zum Eingriffselement in die Verriegelungsstellung mittels eines Federelements oder mehrerer Federelemente und die Rückstellung in die Entriegelungsstellung erfolgt mittels eines elektrisch aktivierbaren Hubmagneten oder mittels eines elektrisch aktivierbaren Formgedächtnisantriebs.

Hubmagneten, Formgedächtnisantriebe und Federelemente für eine Zustellung und/oder Rückstellung haben den Vorteil, dass die Zustellung bzw. Rückstellung vergleichsweise schnell erfolgt im Vergleich zu beispielsweise einem Spindelantrieb.

Wie bereits ausgeführt, umfasst der Aktuator in Ausführungsformen der Erfindung einen elektrisch aktivierbaren oder elektrisch auslösbaren Formgedächtnisantrieb. Solche Formgedächtnisantriebe bzw. Formgedächtnisaktuatoren als Alternative zu Elektromotoren sind grundsätzlich bekannt und handelsüblich erhältlich, beispielsweise von Kunststoffverarbeitung Hoffmann GmbH, Heiligenhaus, Deutschland. Sie verwenden Drähte aus Formgedächtnislegierung, in der Regel aus Nitinol, die sich beim Anlegen eines elektrischen Stroms verkürzen und dabei eine Hub- oder Schubkraft auf ein mit den Drähten verbundenes Stellelement ausüben, welche für eine Zustellung des Verriegelungselements zum Eingriffselement eingesetzt werden kann. Je nach Ausführung sind Formgedächtnisaktuatoren in der Lage, Kräfte in der Größenordnung von 5 - 15 Newton und Hubwege von mehreren Millimetern bereitzustellen.

In einer bevorzugten Ausführungsform umfasst der Aktuator einen Formgedächtnisaktuator für das Entriegeln, d. h. das Rückstellen des Verriegelungselements aus dem Eingriff mit dem Eingriffselement aus der Verriegelungsstellung in die Entriegelungsstellung, und ein Federelement, das auch mehrere Federn umfassen kann und die Zustellung des Verriegelungselements in die Verriegelungsstellung bewirkt oder zumindest unterstützt. Dabei greift das Federelement zweckmäßigerweise entweder an dem Stellelement des Formgedächtnisaktuators oder an dem Verriegelungselement an, um das Verriegelungselement und damit verbunden das Stellelement des Formgedächtnisaktuators bei Stromlosstellung des Formgedächtnisaktuators in die Verriegelungsstellung zurückzustellen.

Bevorzugt werden erfindungsgemäß die Zustellung und die Rückstellung des Verriegelungselements durch den Aktuator elektrisch oder elektronisch ausgelöst und wenigstens eines von beiden, vorzugsweise die Rückstellung in die Entriegelungsstellung, elektrisch betrieben und in der jeweiligen Stellung bestromt gehalten, beispielsweise mittels eines Elektromotors oder eines Formgedächtnisaktuators. Im Falle einer Störung, beispielsweise bei einem Stromausfall oder wenn die Elektronik des Systems gestört ist, kann eine elektrische Entriegelung nicht erfolgen. In einer Ausführungsform der Erfindung umfasst das System daher eine Notentriegelung, welche dafür ausgelegt ist, das Verriegelungselement durch Aufbringen einer Kraft durch eine Bedienperson aus der Verriegelungsstellung außer Eingriff mit dem Eingriffselement in eine Entriegelungsstellung zu bringen. Eine solche Notentriegelung ist manuell zu betätigen, beispielsweise durch einen Hebel, einen Schieber oder einen Zug am Verriegelungselement oder in Verbindung mit diesem, um das Verriegelungselement außer Eingriff mit dem Eingriffselement zu bringen und das System zu entriegeln. Die Notentriegelung dient mit Vorteil dazu, eine Entriegelung bei Bedarf auch manuell durchzuführen oder im Falle eines Ausfalls der elektrischen Entriegelung, beispielsweise bei einem Stromausfall oder wenn die Elektronik des Systems gestört ist.

In einer Ausführungsform des erfindungsgemäßen linearen Führungssystems ist zwischen dem Elektromotor und der Antriebswelle eine Kupplung vorgesehen mit einem ersten Kupplungselement, welches drehfest mit dem Elektromotor verbunden ist, was auch eine drehfeste Verbindung mit der Motorwelle umfasst, und einem zweiten Kupplungselement, welches drehfest mit der Antriebswelle verbunden ist, wobei die Kupplung den Elektromotor und die Antriebswelle derart miteinander verbindet, dass ein Drehmoment von dem Elektromotor auf die Antriebswelle übertragen wird, wobei das erste Kupplungselement und das zweite Kupplungselement kraftschlüssig und/oder formschlüssig miteinander in Eingriff sind.

In einer bevorzugten Ausführungsform ist die Kupplung eine Magnetkupplung, und das erste Kupplungselement und das zweite Kupplungselement sind aufgrund einer magnetischen Kraft kraftschlüssig miteinander in Eingriff. Bei einer erfindungsgemäß geeigneten Magnetkupplung weist zumindest eines der beiden Kupplungselemente oder weisen beide Kupplungselemente einen Permanentmagneten für das bewirken einer magnetischen Anziehungskraft zwischen den Kupplungselementen auf. In einer Ausführungsform ist wenigstens ein Permanentmagnet in einem ferromagnetischen Topf angeordnet.

Zweckmäßigerweise weisen das erste Kupplungselement der Magnetkupplung eine erste Reibfläche und das zweite Kupplungselement eine zweite Reibfläche auf, welche so angeordnet und ausgerichtet sind, dass die erste Reibfläche und die zweite Reibfläche im gekoppelten Zustand miteinander in Reibeingriff sind, sodass das Drehmoment durch einen Reibschluss zwischen der ersten Reibfläche und der zweiten Reibfläche übertragen wird. Der Reibschluss der Kupplungselemente wird durch die magnetische Anziehung zwischen den in Reibeingriff tretenden Flächen der Kupplungselemente verstärkt.

In einer Ausführungsform der Erfindung ist das Eingriffselement des linearen Führungssystems am dem ersten oder zweiten Kupplungselement der Magnetkupplung ausgebildet oder drehfest mit dem ersten oder zweiten Kupplungselement drehfest verbunden.

### FIGUREN

Weitere Vorteile, Merkmale und Anwendungsmöglichkeiten der vorliegenden Erfindung werden anhand der folgenden Beschreibung einer erfindungsgemäßen Ausführungsform und der dazugehörigen Figuren deutlich. In den Figuren sind gleiche Elemente mit gleichen Bezugszeichen bezeichnet.
- Figur 1: zeigt eine perspektivische Darstellung einer ersten Ausführungsform eines erfindungsgemäßen linearen Führungssystems mit einem als Spindelantrieb ausgebildeten Linearantrieb.
- Figur 2: zeigt eine teilweise weggebrochene schematische Darstellung des linearen Führungssystems in einer Verriegelungsstellung von der Seite.
- Figur 3: zeigt eine schematische Ansicht auf das in Figur 2 teilweise weggebrochen dargestellte lineare Führungssystem in einer Blickrichtung von links in Figur 2.
- Figur 4: zeigt eine Ansicht auf einen Schnitt entlang der Schnittlinie F-F in Figur 2 in Blickrichtung der Pfeile in Figur 2.
- Figur 5 oben: zeigt eine Ansicht auf einen Schnitt entlang der Schnittlinie A-A in Figur 2 in Blickrichtung der Pfeile in Figur 2, und Figur 5 unten zeigt eine Vergrößerung aus dem in Figur 5 oben mit Z bezeichneten Kreisausschnitt des Verriegelungselements in Eingriff mit dem Eingriffselement.
- Figur 6: zeigt eine weggebrochene schematische Ansicht des linearen Führungssystems aus Figuren 1 und 2 in einer Draufsicht.
- Figur 7: zeigt eine Ansicht auf einen Schnitt entlang der Schnittlinie B-B in Figur 6 in einer Verriegelungsstellung.
- Figur 8: zeigt eine der Figur 7 entsprechende Querschnittsdarstellung in einer Entriegelungsstellung.
- Figur 9: zeigt eine Ansicht auf einen Schnitt entlang der Schnittlinie K-K in Figur 8.
- Figur 10: zeigt eine weggebrochene perspektivische Darstellung einer alternativen Ausführungsform eines erfindungsgemäßen linearen Führungssystems mit einem Formgedächtnisaktuator am Aktuator.
- Figur 11: zeigt eine perspektivische Ansicht einer weiteren alternativen Ausführungsform des erfindungsgemäßen linearen Führungssystems mit einem Riemenantrieb am Linearantrieb und mit einem Formgedächtnisaktuator am Aktuator.

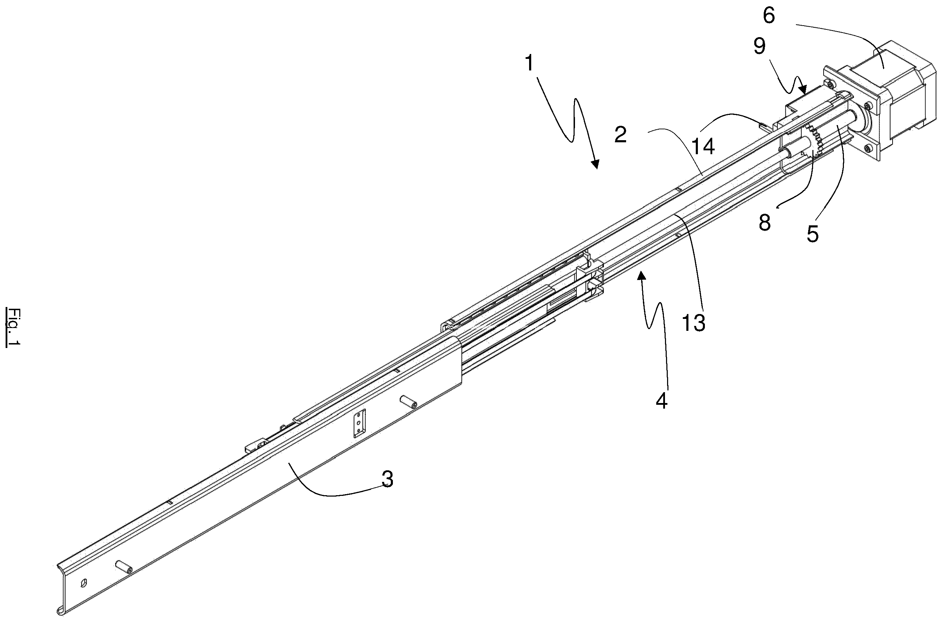

Die Figuren 1 bis 9 zeigen verschiedene Ansichten einer ersten Ausführungsform eines erfindungsgemäßen linearen Führungssystems 1 mit einem ersten Schienenelement 2 und einem zweiten Schienenelement 3 mit jeweils im Wesentlichen C-förmigem Profil, welche über einen Linearantrieb 4 in und entgegen einer Auszugsrichtung linear gegeneinander verschiebbar aneinander gelagert sind. Wie in der perspektivischen Gesamtdarstellung in Figur 1 gezeigt ist, ist der Elektromotor 6 ortsfest in Bezug auf das erste Schienenelement 2 an dessen Ende angeordnet. Die Motorwelle des Elektromotors 6 ist einstückig mit der Antriebswelle 5 ausgebildet. Eine Gewindespindel 13 erstreckt sich koaxial zur Antriebswelle 5 und ist drehfest mit dieser verbunden. Ein scheibenförmiges Eingriffselement 8 ist koaxial zur Antriebswelle 5 angeordnet und drehfest mit dieser verbunden. Das Eingriffselement 8 weist an seiner Umfangsfläche eine radial nach außen weisende Zahnung für einen Eingriff mit einem Verriegelungselement 7 auf. Ebenfalls ortsfest in Bezug auf das erste Schienenelement 2 ist ein Aktuator 9 angeordnet, der für eine Zustellung des Verriegelungselements 7 zu dem Eingriffselement 8 aus einer Entriegelungsstellung in eine Verriegelungsstellung sowie für eine Rückstellung des Verriegelungselements 7 aus einer Verriegelungsstellung in eine Entriegelungsstellung ausgelegt ist. Das zweite Schienenelement 3 ist über einen Mitnehmer derart mit der Gewindespindel 13 verbunden, dass eine Rotationsbewegung der Gewindespindel 13 eine lineare Bewegung des zweiten Schienenelements 3 relativ zu dem ersten Schienenelement 2 in oder entgegen der Auszugsrichtung bewirkt.

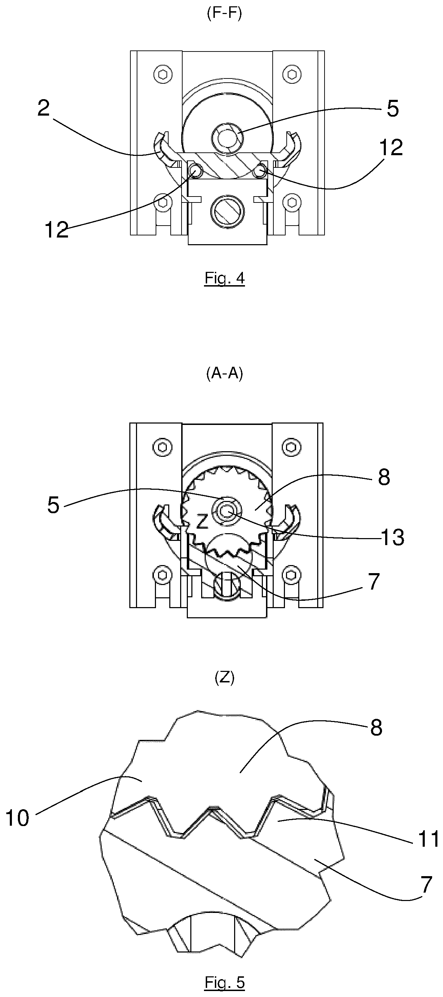

Die Schnittdarstellungen der Figuren 4, 5, 7, 8 und 9 zeigen Details des Aktuators 9 sowie des Eingriffselements 8 und des Verriegelungselements 7. Der Aktuator 9 umfasst einen Hubmagneten 15 für die Rückstellung des Verriegelungselements 7 aus einer Verriegelungsstellung in die Entriegelungsstellung und ein Federelement 12 mit zwei Einzelfedern für eine Zustellung des Verriegelungselements 7 zu dem Eingriffselement 8 aus der Entriegelungsstellung in die Verriegelungsstellung. Der Hubmagnet 15 weist einen in einer Spule 17 geführten Anker 16 auf, welcher mit dem Verriegelungselement 7 verbunden ist und dieses bei elektrischer Aktivierung des Hubmagneten linear geführt aus der Verriegelungsstellung in die Entriegelungsstellung bewegt und außer Eingriff mit dem Eingriffselement 8 bringt.

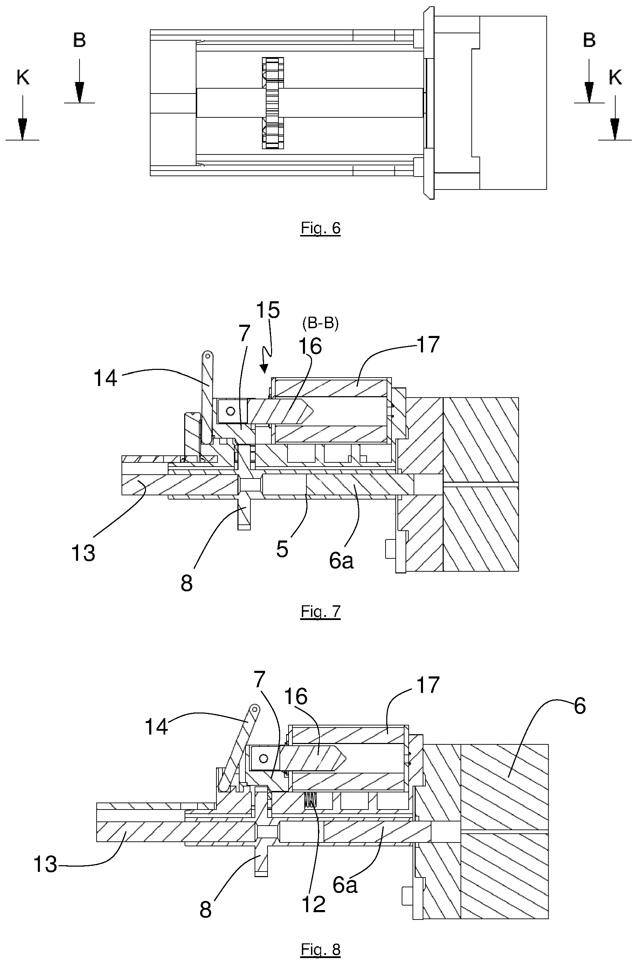

Die Schnittdarstellung in Figur 7 zeigt das System in der Verriegelungsstellung, und die Schnittdarstellung in Figur 8 zeigt das System in der Entriegelungsstellung. Das Federelement 12 ist in der Entriegelungsstellung in Richtung der Verriegelungsstellung gegen das Verriegelungselement 7 vorgespannt und drückt dieses in die Verriegelungsstellung, wenn der Hubmagnet stromlos geschaltet wird. Mittels eines Notentriegelungshebels 14 kann das System manuell entriegelt werden, beispielsweise im Falle eines Stromausfalls, indem er in Richtung des Ankers des Hubmagneten gedrückt wird und damit den Anker des Hubmagneten und das damit verbundene Verriegelungselement in die Entriegelungsstellung schiebt.

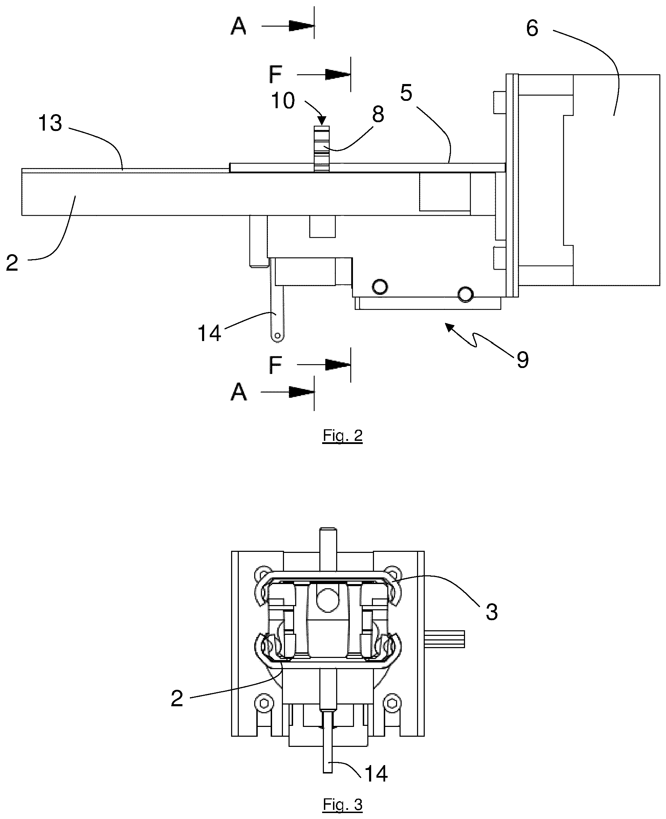

Figur 5 zeigt eine fluchtende Schnittdarstellung entlang der Schnittlinie A-A in Figur 2 in einer Verriegelungsstellung des Systems, in welcher das Verriegelungselement 7 mit dem Eingriffselement 8 in Eingriff ist. Die Ausschnittsvergrößerung Z in Figur 5 unten zeigt den Eingriff des gezahnten Eingriffsprofils 10 des Eingriffselements 8 mit dem entsprechend gezahnten Gegenprofil 11 des Verriegelungselements 7, wodurch eine Rotationsbewegung der Antriebswelle blockiert und somit ein weiteres Verfahren der Schienenelemente gegeneinander verhindert wird.

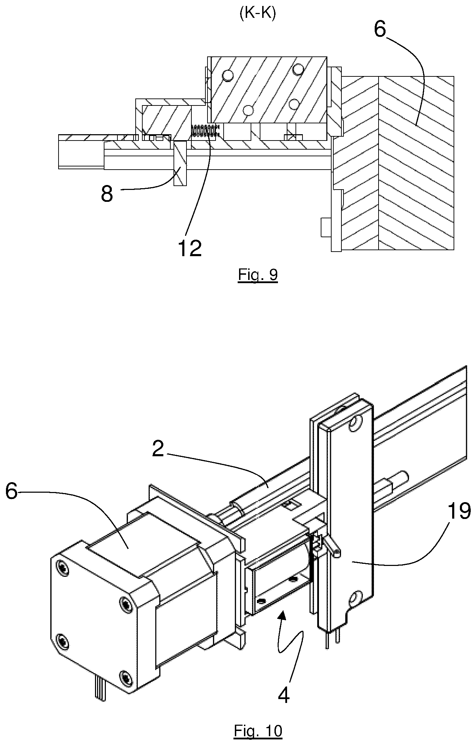

Figur 10 zeigt eine weggebrochene perspektivische Darstellung einer alternativen Ausführungsform, bei welcher der Aktuator anstelle eines Hubmagneten einen Formgedächtnisantrieb 19 für die Rückstellung des Verriegelungselements aus der Verriegelungsstellung in die Entriegelungsstellung aufweist. Der Formgedächtnisaktuator weist im Gehäuse einen Draht aus dem Formgedächtnismetall Nitinol auf, welcher sich bei Aktivierung unter Stromfluss verkürzt und ein Stellelement, vergleichbar mit dem Anker 16 des zuvor beschriebenen Hubmagneten 15, in die Entriegelungsstellung drückt (nicht dargestellt). Das Stellelement des Formgedächtnisaktuators 19 ist mit dem Verriegelungselement verbunden und bringt dieses beim Verfahren in die Entriegelungsstellung außer Eingriff mit dem Eingriffselement.

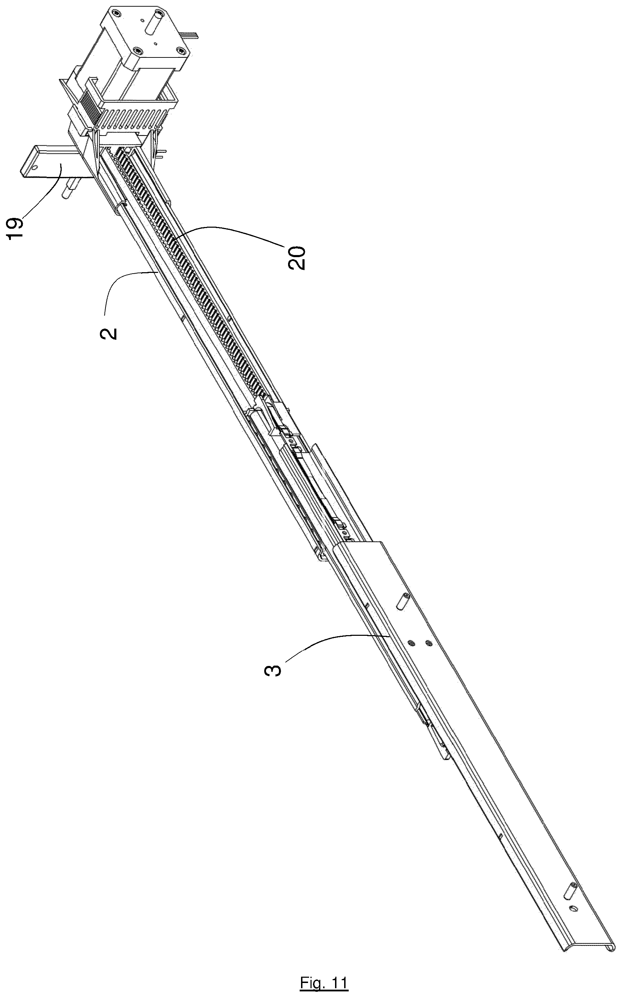

Bei der in Figur 11 gezeigten weiteren alternativen Ausführungsform eines erfindungsgemäßen linearen Führungssystems umfasst der Linearantrieb einen sich in Längsrichtung der Schienenelemente erstreckenden geschlossenen Zahnriemen 20, welcher als Flachband ausgebildet und auf der nach innen gewandten Oberfläche gezahnt ist. In dieser Ausführungsform wird der Zahnriemen 20 mittels einer mit der Antriebswelle verbundenen und in Umfangsrichtung ebenfalls mit einer Zahnung versehenen Riemenscheibe (nicht dargestellt) für ein Verfahren der ersten und zweiten Schienenelemente 2, 3 angetrieben und am motorseitigen Ende des linearen Führungssystems umgelenkt. Das zweite Schienenelement 3 ist über einen Mitnehmer mit dem Zahnriemen 20 verbunden. Bei der in Figur 11 dargestellten Ausführungsform umfasst der Aktuator wie die Ausführungsform gemäß Figur 10 einen Formgedächtnisaktuator für die Rückstellung des Verriegelungselements aus der Verriegelungsstellung in die Entriegelungsstellung sowie ein Federelement für die Zustellung des Verriegelungselements zu dem Eingriffselement aus der Entriegelungsstellung in die Verriegelungsstellung.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit es nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellungsbeschreibung lediglich beispielhaft und ist nicht als Beschränkung des Schutzbereichs gedacht, so wie er durch die Ansprüche definiert wird. Die Erfindung ist nicht auf die dargestellten Ausführungsformen beschränkt. Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### BEZUGSZEICHENLISTE

- 1: Lineares Führungssystem
- 2: erstes Schienenelement
- 3: zweites Schienenelement
- 4: Linearantrieb
- 5: Antriebswelle
- 6: Elektromotor
- 6a: Motorwelle
- 7: Verriegelungselement
- 8: Eingriffselement
- 9: Aktuator
- 10: Eingriffsprofil des Eingriffselements 8
- 11: Gegenprofil des Verriegelungselements 7
- 12: Federelement
- 13: Gewindespindel
- 14: Notentriegelungshebel
- 15: Hubmagnet
- 16: Anker
- 17: Spule
- 19: Formgedächtnisaktuator
- 20: Zahnriemen

## Patentansprüche

1. Lineares Führungssystem (1) umfassend Teleskopschienen und Linearführungen mit mindestens zwei über Wälzkörperlager linear gegeneinander verschiebbar aneinander gelagerten Schienenelementen mit
mindestens einem ersten Schienenelement (2) und einem zweiten Schienenelement (3), welche in und entgegen einer Auszugsrichtung linear gegeneinander verschiebbar aneinander gelagert sind,
einem Linearantrieb (4), welcher eine rotierbare Antriebswelle (5) und einen für die Übertragung eines Drehmoments auf die Antriebswelle (5) ausgelegten Elektromotor (6) aufweist, wobei der Linearantrieb (4) derart ausgestaltet ist, dass eine Rotationsbewegung der Antriebswelle (5) eine lineare Bewegung der ersten und zweiten Schienenelemente (2, 3) in oder entgegen der Auszugsrichtung relativ zueinander bewirkt,
wobei
ein zwischen einer Entriegelungsstellung und einer Verriegelungsstellung zustellbares und rückstellbares Verriegelungselement (7) vorgesehen ist,
welches derart ausgebildet ist, dass es für eine Blockierung der Rotationsbewegung der Antriebswelle (5) in der Verriegelungsstellung mit einem mit der Antriebswelle (5) drehfest verbundenen oder als Abschnitt der Antriebswelle (5) ausgebildeten Eingriffselement (8) formschlüssig und/oder kraftschlüssig in Eingriff tritt, und
ein Aktuator (9) vorgesehen ist, welcher für eine Zustellung des Verriegelungselements (7) zu dem Eingriffselement (8) aus der Entriegelungsstellung in die Verriegelungsstellung sowie für eine Rückstellung des Verriegelungselements (7) aus der Verriegelungsstellung in die Entriegelungsstellung ausgelegt ist,
wobei das Verriegelungselement (7) derart gelagert ist, dass die Zustellung des Verriegelungselements (7) zum Eingriffselement (8) von der Entriegelungsstellung in die Verriegelungsstellung a) linear parallel zur Rotationsachse der Antriebswelle (5), b) auf einer linearen oder gekrümmten Bahn mit zur Rotationsachse der Antriebswelle (5) parallelen und radialen Richtungskomponenten oder c) auf einer Kreisbahn um eine parallel oder senkrecht zur Rotationsachse der Antriebswelle (5) angeordnete Drehachse erfolgt.

2. Lineares Führungssystem (1) nach Anspruch 1, wobei der Linearantrieb (4) eine Spindel umfasst, vorzugsweise eine Gewindespindel, welche derart ausgestaltet und angeordnet ist, dass eine Rotationsbewegung der Spindel eine lineare Bewegung der ersten und zweiten Schienenelemente (2, 3) in oder entgegen der Auszugsrichtung relativ zueinander bewirkt, und wobei die Antriebswelle (5) des Linearantriebs (4) wenigstens abschnittsweise als Spindel ausgebildet ist oder derart drehfest mit der Spindel verbunden ist, dass eine Rotationsbewegung der Antriebswelle (5) eine Rotationsbewegung der Spindel bewirkt.

3. Lineares Führungssystem (1) nach Anspruch 1, wobei der Linearantrieb (4) einen offenen, geschlossenen oder endlosen Zahnriemen und eine den Zahnriemen antreibende Riemenscheibe umfasst, welche derart ausgestaltet und angeordnet sind, dass eine Rotationsbewegung der Riemenscheibe einen Antrieb des Zahnriemens bewirkt und der Antrieb des Zahnriemens eine lineare Bewegung der ersten und zweiten Schienenelemente (2, 3) in oder entgegen der Auszugsrichtung (90) relativ zueinander bewirkt, und wobei die Antriebswelle (5) des Linearantriebs (4) wenigstens abschnittsweise als Riemenscheibe ausgebildet ist oder derart drehfest mit der Riemenscheibe verbunden ist, dass eine Rotationsbewegung der Antriebswelle (5) eine Rotationsbewegung der Riemenscheibe bewirkt.

4. Lineares Führungssystem (1) nach einem der vorhergehenden Ansprüche, wobei das Eingriffselement (8) im Wesentlichen rotationssymmetrisch bezüglich der Rotationsachse der Antriebswelle (5) ausgebildet und angeordnet ist und vorzugsweise einen größeren Durchmesser als die Antriebswelle (5) aufweist, wobei das Eingriffselement (8) weiter vorzugsweise im Wesentlichen scheibenförmig oder zylinderförmig ausgebildet ist.

5. Lineares Führungssystem (1) nach einem der vorhergehenden Ansprüche, wobei das Eingriffselement (8) auf einer zur Rotationsachse der Antriebswelle (5) radial auswärts weisenden Fläche und/oder auf einer zur Rotationsachse der Antriebswelle (5) in axialer Richtung weisenden Fläche ein Eingriffsprofil (10) aufweist und
das Verriegelungselement (7) ein für einen formschlüssigen Eingriff mit dem Eingriffsprofil (10) des Eingriffselements (8) in der Verriegelungsstellung ausgebildetes Gegenprofil (11) aufweist.

6. Lineares Führungssystem (1) nach dem vorhergehenden Anspruch, wobei das Eingriffsprofil (10) des Eingriffselements (8) ein durch Erhebungen und/oder Ausnehmungen auf einer Oberfläche des Eingriffselements (8) ausgebildetes Zahnprofil oder Wellenprofil ist.

7. Lineares Führungssystem (1) nach einem der vorhergehenden Ansprüche, wobei der Aktuator (9) einen elektrisch betriebenen Linearstellantrieb oder Spindelantrieb, einen elektrisch aktivierbaren oder auslösbaren Formgedächtnisaktuator, einen elektrisch aktivierbaren oder auslösbaren Hubmagneten, ein elektrisch aktivierbares oder auslösbares Federelement oder eine Kombination der vorgenannten umfasst.

8. Lineares Führungssystem (1) nach einem der vorhergehenden Ansprüche, wobei der Aktuator wenigstens ein Federelement (10) umfasst,
welches in der Verriegelungsstellung des Verriegelungselements (7) für ein Unterstützen oder Bewirken einer Rückstellung des Verriegelungselements (7) aus der Verriegelungsstellung in die Entriegelungsstellung vorgespannt ist oder
welches in der Entriegelungsstellung des Verriegelungselements (7) für ein Unterstützen oder Bewirken einer Zustellung des Verriegelungselements (7) aus der Entriegelungsstellung in die Verriegelungsstellung vorgespannt ist.

9. Lineares Führungssystem (1) nach einem der vorhergehenden Ansprüche, wobei eine Notentriegelung vorgesehen ist, welche dafür ausgelegt ist, das Verriegelungselement (7) durch Aufbringen einer Kraft durch eine Bedienperson aus der Verriegelungsstellung außer Eingriff mit dem Eingriffselement (8) in eine Entriegelungsstellung zu bringen.

10. Lineares Führungssystem (1) nach einem der vorhergehenden Ansprüche, wobei zwischen dem Elektromotor (6) und der Antriebswelle (5) wenigstens eine Kupplung, vorzugsweise eine Magnetkupplung (13) vorgesehen ist mit einem ersten Kupplungselement (14), welches drehfest mit dem Elektromotor (6) verbunden ist, und einem zweiten Kupplungselement (15), welches drehfest mit der Antriebswelle (5) verbunden ist, wobei die Magnetkupplung (13) den Elektromotor (6) und die Antriebswelle (5) derart miteinander verbindet, dass ein Drehmoment von dem Elektromotor (6) auf die Antriebswelle (5) übertragen wird, wobei das erste Kupplungselement (14) und das zweite Kupplungselement (15) aufgrund einer magnetischen Kraft oder unterstützt durch eine magnetische Kraft kraftschlüssig miteinander in Eingriff sind.

## Claims

1. A linear guide system (1), including telescopic rails and linear guides, with at least two rail elements mounted linearly displaceable relative to each other via rolling element bearings, comprising
at least a first rail element (2) and a second rail element (3), which are mounted so as to be linearly slidable opposite one another in and counter to an extraction direction,
a linear drive (4), which comprises a rotatable drive shaft (5) and an electric motor (6) configured for the transmission of a torque to the drive shaft (5), wherein the linear drive (4) is configured such that a rotational movement of the drive shaft (5) causes a linear movement of the first and second rail elements (2, 3) relative to one another in or counter to the extraction direction,
wherein
a locking element (7) is provided, which can be set and resetting between an unlocked position and a locked position,
which, for blocking the rotational movement of the drive shaft (5) in the locked position, is configured so as to engage in a form-locking or force-locking manner with an engaging element (8) connected to the drive shaft (5) in a rotationally fixed manner or being made as a portion of the drive shaft (5), and
an actuator (9) is provided, which is configured for setting the locking element (7) towards the engaging element (8) from the unlocked position into the locked position, as well as for resetting the locking element (7) from the locked position into the unlocked position,
wherein the locking element (7) is mounted such that the setting of the locking element (7) towards the engaging element (8) from the unlocked position into the locked position occurs a) linearly parallel to the axis of rotation of the drive shaft (5), b) on a linear or curved path having direction components that are parallel and components that are radial to the axis of rotation of the drive shaft (5), or c) on a circular path about an axis of rotation arranged parallel to or perpendicular to the axis of rotation of the drive shaft (5).

2. The linear guide system (1) according to claim 1, wherein the linear drive (4) comprises a spindle, preferably a threaded spindle, which is configured and arranged in such a way that a rotational movement of the spindle causes a linear movement of the first and second rail elements (2, 3) relative to one another in or counter to the extraction direction, and wherein the drive shaft (5) of the linear drive (4) is configured as a spindle at least in sections or is connected to the spindle in a rotationally fixed manner such that a rotational movement of the drive shaft (5) causes a rotational movement of the spindle.

3. The linear guide system (1) according to claim 1, wherein the linear drive (4) comprises an open, closed, or continuous toothed belt and a pulley that drives the toothed belt, which are configured and arranged in such a way that a rotational movement of the pulley causes a driving of the toothed belt and the driving of the toothed belt causes a linear movement of the first and second rail elements (2, 3) relative to one another in or counter to the extraction direction (90), and wherein the drive shaft (5) of the linear drive (4) is configured as a pulley at least in sections or is connected to the pulley in a rotationally fixed manner such that a rotational movement of the drive shaft (5) causes a rotational movement of the pulley.

4. The linear guide system (1) according to any one of the preceding claims, wherein the engaging element (8) is configured and arranged substantially rotationally symmetrically with respect to the axis of rotation of the drive shaft (5) and preferably has a larger diameter than the drive shaft (5), wherein the engaging element (8) is further preferably substantially discoidal or cylindrical.

5. The linear guide system (1) according to any one of the preceding claims, wherein the engaging element (8) has an engagement profile (10) on a surface facing the axis of rotation of the drive shaft (5) radially outward and/or on a surface facing the axis of rotation of the drive shaft (5) in an axial direction, and
the locking element (7) has a counter-profile (11) configured for a form-locking engagement with the engagement profile (10) of the engaging element (8) in the locked position.

6. The linear guide system (1) according to the preceding claim, wherein the engagement profile (10) of the engaging element (8) is a tooth profile or a wave profile formed by protrusions and/or recesses on a surface of the engaging element (8).

7. The linear guide system (1) according to any of the preceding claims, wherein the actuator (9) comprises an electrically operated linear actuator or spindle actuator, an electrically activatable or triggerable shape memory actuator, an electrically activatable or triggerable lifting magnet, an electrically activatable or triggerable spring element, or a combination thereof.

8. The linear guide system (1) according to any of the preceding claims, wherein the actuator comprises at least one spring element (10),
which is prestressed in the locked position of the locking element (7) for supporting or causing a resetting of the locking element (7) from the locked position into the unlocked position or
which is prestressed in the unlocked position of the locking element (7) for supporting or causing a setting of the locking element (7) from the unlocked position into the locked position.

9. The linear guide system (1) according to any one of the preceding claims, wherein an emergency unlocking mechanism is provided, which is configured so as to bring the locking element (7) out of engagement with the engaging element (8) from the locked position into an unlocked position through the application of force by an operator.

10. The linear guide system (1) according to any one of the preceding claims, wherein, between the electric motor (6) and the drive shaft (5), at least one coupling is provided, preferably a magnetic coupling (13), having a first coupling element (14), which is connected to the electric motor (6) in a rotationally fixed manner, and a second coupling element (15), which is connected to the drive shaft (5) in a rotationally fixed manner, wherein the magnetic coupling (13) connects the electric motor (6) and the drive shaft (5) to one another in such a way that a torque is transferred from the electric motor (6) to the drive shaft (5), wherein the first coupling element (14) and the second coupling element (15) are engaged with one another in a force-locking manner due to a magnetic force or supported by a magnetic force.

## Revendications

1. Système de guidage linéaire (1) comprenant des rails télescopiques et des guidages linéaires avec au moins deux éléments de rail disposés de façon adjacente et linéairement déplaçables l'un par rapport à l'autre moyennant des paliers à éléments roulants, avec
au moins un premier élément de rail (2) et un deuxième élément de rail (3) qui sont disposés de façon adjacente et linéairement déplaçables l'un par rapport à l'autre dans une direction d'extraction et à l'encontre de celle-ci,
un entraînement linéaire (4) qui comprend un arbre d'entraînement rotatif (5) et un moteur électrique (6) pour la transmission d'un couple sur l'arbre d'entraînement (5), l'entraînement linéaire (4) étant configuré de façon qu'un mouvement de rotation de l'arbre d'entraînement (5) ait pour effet un mouvement linéaire des premier et deuxième éléments de rail (2, 3) l'un par rapport à l'autre dans la direction d'extraction ou à l'encontre de celle-ci,
un élément de verrouillage (7) étant prévu qui est apte à être mis, par un mouvement de déverrouillage et par un mouvement de retour, dans une position de déverrouillage et dans une position de verrouillage et
qui est configuré de façon que, pour un blocage du mouvement de rotation de l'arbre d'entraînement (5) dans la position de verrouillage, il vienne en prise avec un élément de prise (8) solidaire en rotation avec l'arbre d'entraînement (5) ou attaché à celui-ci par une liaison par formes complémentaires et/ou par une liaison de force et
un actionneur (9) étant prévu qui est configuré pour un mouvement de verrouillage de l'élément de verrouillage (7) vers l'élément de prise (8) de la position de déverrouillage à la position de verrouillage ainsi que pour un mouvement de retour de l'élément de verrouillage (7) de la position de verrouillage à la position de déverrouillage,
l'élément de verrouillage (7) étant monté de façon que le mouvement de verrouillage de l'élément de verrouillage (7) vers l'élément de prise (8) de la position de déverrouillage à la position de verrouillage soit effectué a) linéairement parallèlement à l'axe de rotation de l'arbre d'entraînement (5), b) sur un trajet linéaire ou courbé ayant des composantes parallèles et radiales par apport à l'axe de rotation de l'arbre d'entraînement (5), ou c) sur un trajet circulaire autour d'un axe de rotation disposé parallèlement ou perpendiculairement à l'axe de rotation de l'arbre d'entraînement (5).

2. Système de guidage linéaire (1) selon la revendication 1, l'entraînement linéaire (4) comprenant un axe, de préférence un axe fileté, qui est configuré et disposé de façon qu'un mouvement de rotation de l'axe ait pour effet un mouvement linéaire des premier et deuxième éléments de rail (2, 3) l'un par rapport à l'autre dans la direction d'extraction ou à l'encontre de celle-ci, et l'arbre d'entraînement (5) de l'entraînement linéaire (4) étant configuré, au moins par sections, comme une broche ou étant relié à la broche de façon qu'un mouvement de rotation de l'arbre d'entraînement (5) ait pour effet un mouvement de rotation de la broche.

3. Système de guidage linéaire (1) selon la revendication 1, l'entraînement linéaire (4) comprenant une courroie dentée ouverte, fermée ou sans fin et une poulie entraînant la courroie dentée qui est configuré et disposé de façon qu'un mouvement de rotation de la poulie ait pour effet un entraînement de la courroie dentée et que l'entraînement de la courroie dentée ait pour effet un mouvement linéaire des premier et deuxième éléments de rail (2, 3) l'un par rapport à l'autre dans la direction d'extraction ou à l'encontre de celle-ci, et l'arbre d'entraînement (5) de l'entraînement linéaire (4) étant configuré, au moins par sections, comme poulie ou étant attaché solidairement en rotation à la poulie de façon qu'un mouvement de rotation de l'arbre d'entraînement (5) ait pour effet un mouvement de rotation de la poulie.

4. Système de guidage linéaire (1) selon l'une des revendications précédentes, l'élément de prise (8) étant formé et disposé sensiblement de façon symétrique en rotation par rapport à l'axe de rotation de l'arbre d'entraînement (5) et ayant de préférence un diamètre supérieur à celui de l'arbre d'entraînement (5), l'élément de prise (8) étant formé en outre, de préférence, comme un disque ou un cylindre.

5. Système de guidage linéaire (1) selon l'une des revendications précédentes, l'élément de prise (8) ayant, sur une surface orientée radialement vers l'extérieur vers l'axe de rotation de l'arbre d'entraînement (5) et/ou sur une surface orientée vers l'axe de rotation de l'arbre d'entraînement (5) en direction axiale, un profil de prise (10) et
l'élément de verrouillage (7) comprenant un contre-profil (11) formé pour une prise par complémentarité de formes avec le profil de prise (10) de l'élément de prise (8) dans la position de verrouillage.

6. Système de guidage linéaire (1) selon la revendication précédente, le profil de prise (10) de l'élément de prise (8) étant un profil denté ou un profil ondulé formé par des saillies et/ou des évidements sur une surface de l'élément de prise (8).

7. Système de guidage linéaire (1) selon l'une des revendications précédentes, l'actionneur (9) comprenant un servomoteur ou un entraînement par broche, fonctionnant électriquement, un actionneur à mémoire de forme pouvant être actionné ou déclenché électriquement, un aimant de levage pouvant être actionné ou déclenché électriquement, un élément de ressort pouvant être actionné ou déclenché électriquement, ou une combinaison des éléments précités.

8. Système de guidage linéaire (1) selon l'une des revendications précédentes, l'actionneur comprenant au moins un élément de ressort (10) qui est précontraint, dans la position de verrouillage de l'élément de verrouillage (7), pour un support de ou avoir pour effet, un mouvement de retour de l'élément de verrouillage (7) de la position de verrouillage à la position de déverrouillage ou qui est précontraint, dans la position de déverrouillage de l'élément de verrouillage (7), pour un support de ou avoir pour effet, un mouvement de retour de l'élément de verrouillage (7) de la position de déverrouillage à la position de verrouillage.

9. Système de guidage linéaire (1) selon l'une des revendications précédentes, un déverrouillage d'urgence étant prévu qui est configuré pour faire passer l'élément de verrouillage (7), par application d'un effort par un opérateur, de la position de verrouillage hors prise avec l'élément de prise (8) à une position de déverrouillage.

10. Système de guidage linéaire (1) selon l'une des revendications précédentes, au moins un accouplement, de préférence un accouplement magnétique (13), étant prévu entre le moteur électrique (6) et l'arbre d'entraînement (5), avec un premier élément d'accouplement (14) attaché solidairement en rotation avec le moteur électrique (6) et un deuxième élément d'accouplement (15) attaché solidairement en rotation avec l'arbre d'entraînement (5), l'accouplement magnétique (13) reliant le moteur électrique (6) et l'arbre d'entraînement (5) l'un à l'autre de façon qu'un couple soit transmis du moteur électrique (6) à l'arbre d'entraînement (5), le premier élément d'accouplement (14) et le deuxième élément d'accouplement (15) étant en prise de force l'un avec l'autre par un effort magnétique ou par un support par un effort magnétique.
